# EUROPEAN PATENT APPLICATION

(11) **EP 4 583 384 A1**
(43) Date of publication of application: **09.07.2025**
(21) Application number: 24794325.1
(22) Date of filing: 30.10.2024
(51) Int. Cl.: H02M 1/00, H02M 3/07, H02M 3/155, G06F 1/16, G09G 3/3208

(54) **ELECTRONIC DEVICE AND OPERATION METHOD THEREOF**

(30) Priority: 31.10.2023 KR 20230148127; 29.12.2023 KR 20230196600
(71) Applicant: Samsung Electronics Co., Ltd, Suwon-si, Gyeonggi-do 16677 (KR)
(72) Inventor: CHOI, Kyusik, Suwon-si, Gyeonggi-do 16677 (KR)
(74) Representative: HGF
(86) International application number: PCT/KR2024/016807
(87) International publication number: WO 2025/095576

(57) **Abstract**

An electronic device may include a power conversion circuit and a load configured to receive power from the power conversion circuit. The power conversion circuit may include a converter including an inductor, a first switch, and a second switch. The power conversion circuit may include a charge pump including a third switch, a fourth switch, a first capacitor, a fifth switch, and a sixth switch. The power conversion circuit may include a second capacitor, a first active dummy load connected in parallel with the second capacitor, a third capacitor, and a second active dummy load connected in parallel with the third capacitor. Various other embodiments are available.

## Description

### [Technical Field]

The disclosure relates to an electronic device and a method for operating the same.

### [Background Art]

A circuit responsible for light emission of an organic light emitting diode (OLED) driver may include a light emitting diode (LED) that emits light when current flows, and a switch (e.g., a field effect transistor (FET)) that controls the current flowing through the LED. Because a gate voltage for controlling current flowing through the FET is very sensitive, the voltage may be formed based on a ground rather than a floated state. For example, with the top (e.g. first terminal, anode terminal, or anode) of the LED connected to the bottom (e.g. second terminal, source terminal, or source) of the FET, the bottom of the FET may be connected to the ground of a system. Therefore, when a voltage supplied to the top (e.g. first terminal, drain terminal, or drain) of the FET is VELVDD and a voltage supplied to the bottom (e.g. second terminal, cathode terminal, or cathode) of the LED is VELVSS, power with VELVDD>0 and VELVSS<0 needs to be supplied. When the LED is disposed on top of the FET (e.g. with the bottom, or second terminal of the LED connected to the top, or drain terminal of the FET) for current control, a negative voltage is not needed. However, since voltages for driving the FET and the LED are accumulated in series, there is a problem in that a high voltage corresponding to the sum of the two voltages is to be supplied. Except for some products, therefore, a structure that may avoid the high voltage issue by separately supplying positive and negative voltages with respect to the ground is selected.

A switching regulator (or switching converter) is a circuit that converts a direct current (DC) voltage into a DC voltage, and a buck converter is used for step-down, a boost converter for step-up, and a non-inverting buck-boost converter for both step-up and step-down.

The above information is presented as background information only to assist with an understanding of the disclosure. No determination has been made, and no assertion is made, as to whether any of the above might be applicable as prior art with regard to the disclosure.

### [Disclosure of Invention]

### [Solution to Problems]

According to an embodiment, an electronic device includes a power conversion circuit and a load configured to receive power from the power conversion circuit. The power conversion circuit includes a converter including an inductor, a first switch, and a second switch. The power conversion circuit includes a charge pump including a third switch, a fourth switch, a first capacitor, a fifth switch, and a sixth switch. The power conversion circuit includes a second capacitor, a first active dummy load connected in parallel with the second capacitor, a third capacitor, and a second active dummy load connected in parallel with the third capacitor.

According to an embodiment, a method for operating an electronic device includes controlling switches of a converter of the electronic device and switches of a charge pump connected in parallel with the converter. The converter includes an inductor, a first switch, and a second switch. The charge pump includes a third switch, a fourth switch, a first capacitor, a fifth switch, and a sixth switch. The method includes controlling a first active dummy load connected in parallel with a second capacitor of the electronic device or controlling a second active dummy load connected in parallel with a third capacitor of the electronic device.

According to an embodiment, in a computer-readable recording medium storing instructions configured to cause a controller of an electronic device to perform at least one operation, the at least one operation includes controlling switches of a converter of the electronic device and switches of a charge pump connected in parallel with the converter. The converter includes an inductor, a first switch, and a second switch. The charge pump includes a third switch, a fourth switch, a first capacitor, a fifth switch, and a sixth switch. The at least one operation includes controlling a first active dummy load connected in parallel with a second capacitor of the electronic device or controlling a second active dummy load connected in parallel with a third capacitor of the electronic device.

### [Brief Description of Drawings]

FIG. 1 is a block diagram illustrating an electronic device in a network environment according to an embodiment.
FIG. 2 is a block diagram illustrating an electronic device according to an embodiment.
FIG. 3 is a circuit diagram illustrating an electronic device according to an embodiment.
FIG. 4 is a circuit diagram illustrating an active dummy load in an electronic device according to an embodiment.
FIG. 5 is a circuit diagram illustrating a load in an electronic device according to an embodiment.
FIG. 6 is a diagram illustrating an electronic device according to an embodiment.
FIG. 7 is a flowchart illustrating a method for operating an electronic device according to an embodiment.
FIG. 8 is a flowchart illustrating a method for operating an electronic device according to an embodiment.
FIG. 9 is a flowchart illustrating a method for operating an electronic device according to an embodiment.
FIG. 10 is a flowchart illustrating a method for operating an electronic device according to an embodiment.

### [Mode for the Invention]

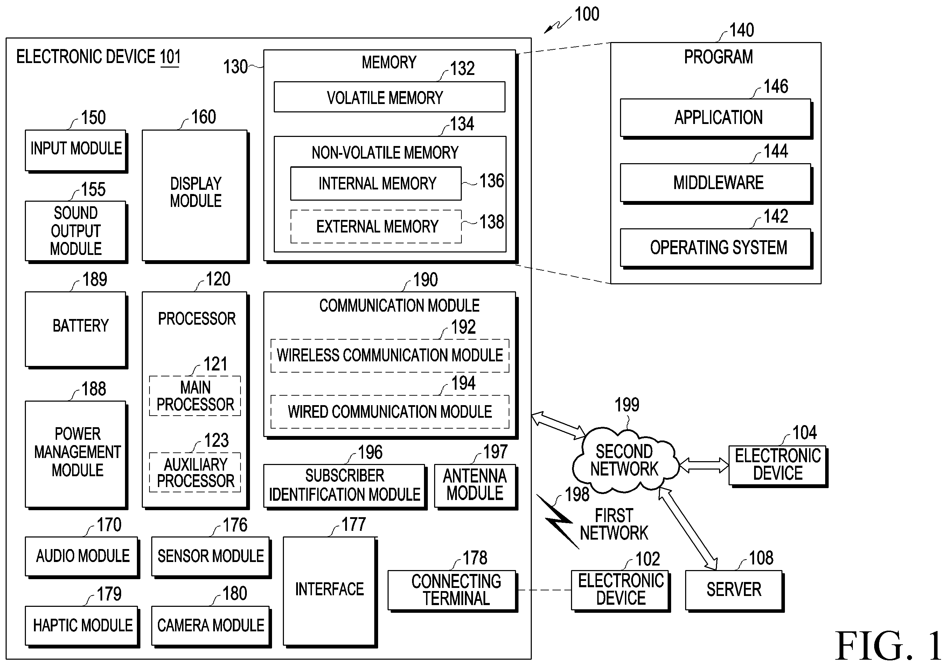

FIG. 1 is a block diagram illustrating an electronic device in a network environment according to an embodiment.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to some embodiments, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

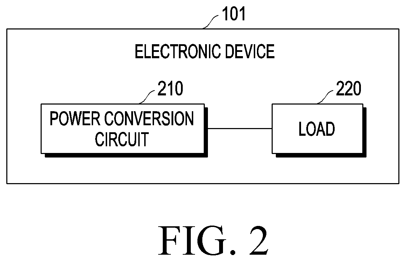

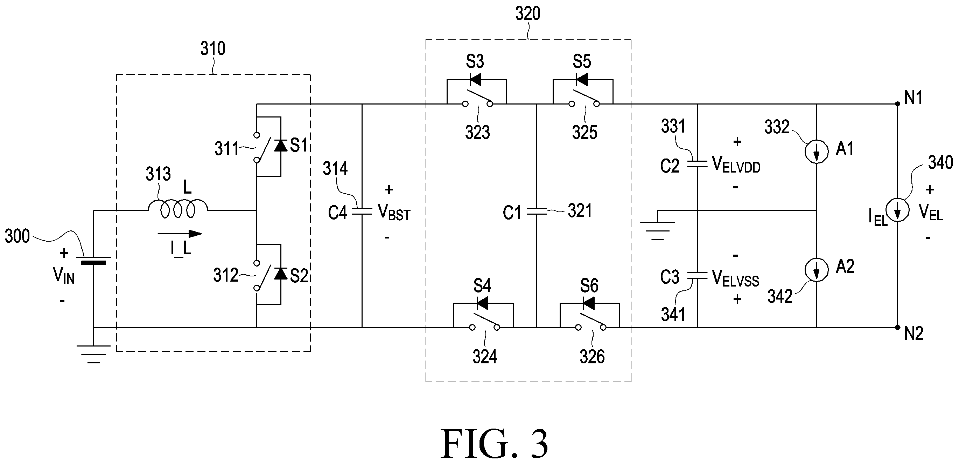

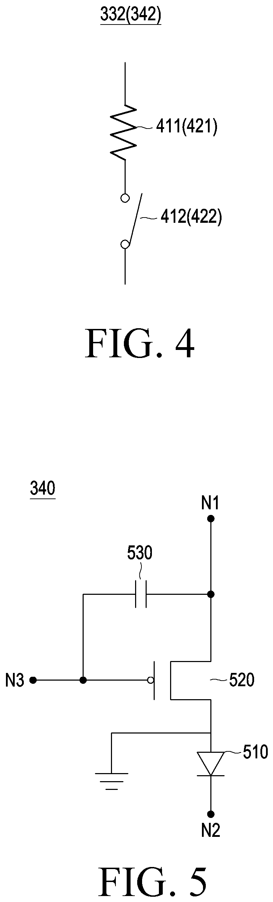

FIG. 2 is a block diagram illustrating an electronic device according to an embodiment. FIG. 3 is a circuit diagram illustrating an electronic device according to an embodiment. FIG. 4 is a circuit diagram illustrating an active dummy load in an electronic device according to an embodiment. FIG. 5 is a circuit diagram illustrating a load in an electronic device according to an embodiment.

According to an embodiment, the processor 120 of FIG. 1 in the electronic device 101 may be referred to as processing means, control means, or a controller 120. An operation of the electronic device 101 according to an embodiment may be controlled by the controller 120 (e.g., the processor 120 in FIG. 1) of the electronic device 101. When the electronic device 101 performs a specific operation, this may amount to the electronic device 101 or a component included in the electronic device 101 being controlled by the controller 120 of the electronic device 101. The electronic device 101 may include one or more controllers 120, and hereinafter, even if a plurality of controllers 120 are implemented, the operation is referred to as the "operation of the electronic device 101" or the "operation of the controller 120," for convenience of description.

Referring to FIG. 2, according to an embodiment, the electronic device 101 may include a power conversion circuit 210 (e.g. power conversion means, power converter module, power, converter portion, or power converter stage 210) and a load 220 (e.g., 340 in FIG. 3). The power conversion circuit 210 may provide power to the load 220. The load 220 may receive the power from the power conversion circuit 210. For example, the load 220 may include at least one (e.g., an organic light emitting diode (OLED) or an OLED driver) of the components of the display module 160 in FIG. 1. However, this is only an example, and the type of the load 220 is not limited. For example, referring to FIG. 5, the load 220 (e.g., 340 in FIGS. 3 and 5) may include a light emitting diode (LED) 510 and a switch 520. This switch, and each switch mentioned previously or hereafter in this specification, may, for example, be a switch or switching device, switch or switching element, switch or switching component, or switch or switching means. The switch (e.g., 520 and later-disclosed switches 311, 312, 323, 324, 325, and 326) may include a transistor (e.g., a metal oxide semiconductor field effect transistor (MOSFET)). The load 220 (e.g., 340 in FIGS. 3 and 5) may include a storage capacitor 530 (e.g., Cstg). The storage capacitor 530 (e.g., Cstg) may be connected in parallel with (e.g. between) the gate and source of a driving transistor (e.g., the switch 520). The storage capacitor 530 (e.g., Cstg) may store a voltage between the gate and source of the driving transistor (e.g., the switch 520) applied according to a control signal (e.g., a signal provided through an N3 node in FIG. 5) for the duration of one frame. A positive voltage (e.g., V_{ELVDD} in FIG. 3) may be provided to one end (e.g. first terminal, drain terminal, or drain) (e.g., an N1 node) of the switch 520 (e.g., transistor) of the load 220 (e.g., 340 in FIGS. 3 and 5). The other end (e.g. second terminal, source terminal, or source) of the switch 520 (e.g., transistor) may be connected to one end (e.g. first terminal, anode terminal, or anode) of the LED 510 and a ground. A negative voltage (e.g., V_{ELVSS} in FIG. 3) may be provided to the other end (e.g. second terminal, cathode terminal, or cathode)(e.g., an N2 node) of the LED 510. With reference to FIG. 3, the power conversion circuit 210 that provides power to the load 220 (e.g., 340 in FIGS. 3 and 5) will be described.

Referring to FIG. 3, according to an embodiment, the power conversion circuit 210 may include a converter 310 (e.g. converter means, conversion means, converter module, converter circuit, converter sub-circuit, converter portion, or converter stage 310) . The converter 310 may be configured to convert power provided from a power source 300 (e.g. power supply or power supply means, power source or supply module, power source or supply circuit, power source or supply sub-circuit, power source or supply portion, or power source or supply stage 300). For example, the converter 310 may be a boost converter or a non-inverting buck-boost converter. However, the type of the converter 310 is not limited. For example, the converter 310 may include an inductor 313, a first switch 311, and a second switch 312. The converter 310 may be configured to convert the power provided from the power source 300 based on operations (e.g., on/off) of the switches 311 and 312. The electronic device 101 (e.g., the controller 120) may convert the power provided from the power source 300 by controlling the converter 310 (e.g., the switches 311 and 312 of the converter 310). According to an embodiment, the electronic device 101 may include a capacitor 314 (e.g., a boost capacitor) (e.g., C4 in FIG. 3) connected in parallel with the converter 310 (e.g. connected between output terminals, or output rails, of the converter 310). According to an embodiment, the electronic device 101 may not include the capacitor 314 connected in parallel with the converter 310.

Referring to FIG. 3, according to an embodiment, the electronic device 101 (e.g., the power conversion circuit 210) may include a charge pump 320 (e.g. charge pump means, charge pumping means, charge pump module, charge pump circuit, charge pump sub-circuit, charge pump portion, or charge pump stage 320). The charge pump 320 may be connected in parallel with the converter 310. The charge pump 320 may shift a bias from the ground to V_{ELVSS}. Although the charge pump 320 may be a 1:1 charge pump 320, the type of the charge pump 320 is not limited. For example, the charge pump 320 may include a third switch 323, a fourth switch 324, a first capacitor 321 (e.g. a fly capacitor), a fifth switch 325, and a sixth switch 326. The charge pump 320 may store power provided by the converter 310 or the capacitor 314 (e.g., C4 in FIG. 3) connected in parallel with the converter 310 in the first capacitor 321, based on operations (e.g., on/off) of the switches 323, 324, 325, and 326. The charge pump 320 may output power through the fifth switch 325 and the sixth switch 326 based on the power stored in the first capacitor 321, based on the operations (e.g., on/off) of the switches 323, 324, 325, and 326. For example, the power stored in the first capacitor 321 of the charge pump 320 may be provided to capacitors (e.g., 331 and 341) connected to a rear end (or output end) of the charge pump 320, for example to capacitors connected in series with each other, between output terminals, or output rails, of the charge pump 320. The electronic device 101 (e.g., the power conversion circuit 210) may include a second capacitor 331 and a third capacitor 341. The second capacitor 331 and the third capacitor 341 may be provided with the power stored in the first capacitor 321 based on the operations (e.g., on/off) of the switches 323, 324, 325, and 326 of the charge pump 320. The third capacitor 341 may be connected to the second capacitor 331 and the ground. For example, the second capacitor 331 may store power corresponding to a positive voltage (e.g., V_{ELVDD} in FIG. 3). The third capacitor 341 may store power corresponding to a negative voltage (e.g., V_{ELVSS} in FIG. 3). The power corresponding to the positive voltage (e.g., V_{ELVDD} in FIG. 3) stored in the second capacitor 331 may be provided to a first end (e.g. first terminal)(e.g., the N1 node) of the load 220 (e.g., 340 in FIGS. 3 and 5). The power corresponding to the negative voltage (e.g., V_{ELVSS} in FIG. 3) stored in the third capacitor 341 may be provided to a second end (e.g. second terminal) (e.g., the N2 node) of the load 220 (e.g., 340 in FIGS. 3 and 5). It will be appreciated that the N1 node may, for example, be described as being a terminal of, or a connection to, a first power rail (e.g. a first power supply rail, a first rail, a positive supply rail, a positive rail, or a high rail), and the N2 node may, for example, be described as being a terminal of, or a connection to, a second power rail (e.g. a second power supply rail, a second rail, a negative supply rail, a negative rail, or a low rail).

Referring to FIG. 3, according to an embodiment, the electronic device 101 (e.g., the power conversion circuit 210) may include a first load 332 (e.g. a first active (i.e. controllable) load, or a first active dummy load 332) connected in parallel with the second capacitor 331 (e.g., a shunt capacitor), and a second load 342 (e.g. a second active (i.e. controllable) load, or a second active dummy load 342) connected in parallel with the third capacitor 341 (e.g., a shunt capacitor). The load (e.g. active dummy load) 332 or 342 may be configured to control a voltage of the capacitor 331 or 341 connected in parallel therewith. For example, the electronic device 101 (e.g., the controller 120) may control the voltage of the capacitor 331 or 341 connected in parallel with the load (e.g. active dummy load) 332 or 342 by controlling the load (e.g. active dummy load) 332 or 342. For example, referring to FIG. 4, the first active dummy load 332 may include a resistor 411 and a switch 412. The second active dummy load 342 may include a resistor 421 and a switch 422. A method for implementing the first active dummy load 332 and the second active dummy load 342 is not limited. For example, the first active dummy load 332 may include a circuit related to the operation of the resistor 411 and/or the switch 412. For example, the second active dummy load 342 may include a circuit related to the operation of the resistor 421 and/or the switch 422. For example, the first active dummy load 332 may include a circuit that causes a similar effect to that of a resistor (e.g., 411) without including the resistor 411. For example, the first active dummy load 332 may include a circuit that causes a similar effect to that of the switch 412 without including the switch 412. For example, the second active dummy load 342 may include a circuit that causes a similar effect to that of a resistor (e.g., 421) without including the resistor 421. For example, the second active dummy load 342 may include a circuit that causes a similar effect to that of the switch 422 without including the switch 422. Controlling the active dummy load 332 or 342 may include controlling the switch 412 or 422 of the active dummy load 332 or 342. For example, the electronic device 101 (e.g., the controller 120) may control the voltage of the capacitor 331 or 341 connected in parallel with the active dummy load 332 or 342 by controlling the switch 412 or 422 of the active dummy load 332 or 342.

It will be appreciated that each "active dummy load" described in this specification may, for example, be "active" in the sense that it is controllable (and so, for example, has at least one controllable or variable electrical property, and/or at least one controllable electrical element, component, or device), and not entirely passive, and may, for example, be "dummy" in the sense that it is not the actual load (or the eventual, destination, final, or real load) being powered by the power conversion circuit 210. The word "dummy" in this context may, for example, be replaced by "pseudo". Each active dummy load is part of the power conversion circuit 210 itself, and so may be described, for example, as an internal load, or an internal controllable load.

Referring to FIG. 3, according to an embodiment, a first end of the inductor 313 of the converter 310 may be connected to a first end of the first switch 311 of the converter 310 and a first end of the second switch 312 of the converter 310. It will be appreciated that, throughout this specification, the term "end" may alternatively be replaced by the term "terminal", and so this disclosure includes disclosure of subject matter corresponding to all of the text of this specification, but with the term "end" replaced by "terminal". A second end of the inductor 313 may be connected to the power source 300. A second end of the first switch 311 of the converter 310 may be connected to a first end of the third switch 323 of the charge pump 320. A second end of the second switch 312 of the converter 310 may be connected to a first end of the fourth switch 324 of the charge pump 320 and the ground. A second end of the third switch 323 of the charge pump 320 may be connected to a first end of the fifth switch 325 of the charge pump 320 and a first end of the first capacitor 321 of the charge pump 320. A second end of the fourth switch 324 of the charge pump 320 may be connected to a first end of the sixth switch 326 of the charge pump 320 and a second end of the first capacitor 321 of the charge pump 320. A second end of the fifth switch 325 of the charge pump 320 may be connected to a first end of the second capacitor 331 and a first end of the first active dummy load 332. A second end of the sixth switch 326 of the charge pump 320 may be connected to a first end of the third capacitor 341 and a first end of the second active dummy load 342. A second end of the second capacitor 331 may be connected to a second end of the first active dummy load 332, a second end of the second active dummy load 342, a second end of the third capacitor 341, and the ground. A first end of the load 220 or 340 may be connected to the first end of the second capacitor 331. A second end of the load 220 or 340 may be connected to the first end of the third capacitor 341. A first end of the fourth capacitor 314 may be connected to the second end of the first switch 311 of the converter 310 and the first end of the third switch 323 of the charge pump 320. A second end of the fourth capacitor 314 may be connected to the second end of the second switch 312 of the converter 310 and the first end of the fourth switch 324 of the charge pump 320.

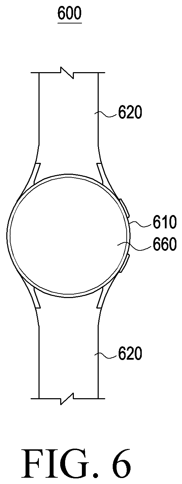

FIG. 6 is a diagram illustrating an electronic device according to an embodiment.

Referring to FIG. 6, according to an embodiment, the electronic device 101 may be a wearable device 600. The descriptions of the electronic device 101 in FIGS. 1, 2, 3, 4, and 5, and the electronic device 101 described later may be applied to the wearable device 600 of FIG. 6. In FIG. 6, the electronic device 101 (e.g., the wearable device 600) may include a housing 610, a display 660 (e.g., the display module 160 in FIG. 1), and a strap 620. The strap 620 may be configured to mount the electronic device 101 (e.g., the wearable device 600) on a user's wrist. As power is provided to the load 220 (e.g., 340 in FIGS. 3 and 5) (e.g., an OLED or an OLED driver), a screen may be displayed on the display 660 (e.g., the display module 160 in FIG. 1). While the electronic device 101 (e.g., the wearable device 600) is disclosed in FIG. 6 as a watch-shaped device, this is only an example, and the electronic device 101 (e.g., the wearable device 600) is not limited to the watch-shaped device. For example, the electronic device 101 may be a portable communication device (e.g., a smartphone), a computer device, a portable multimedia device, a portable medical device, a camera, a wearable device, or a home appliance.

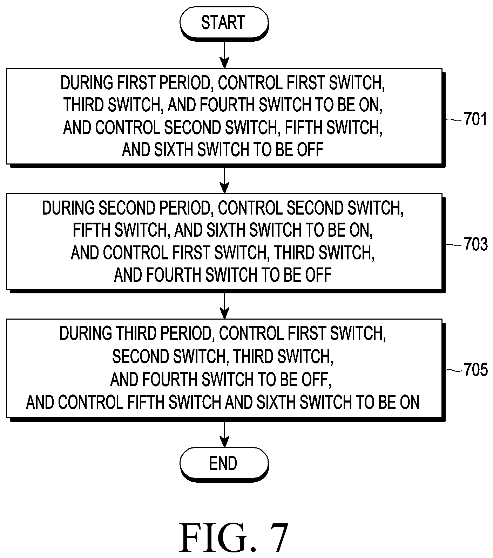

FIG. 7 is a flowchart illustrating a method for operating an electronic device according to an embodiment. FIG. 7 may be described with reference to the afore-described embodiments and later-described embodiments.

At least some of the operations in FIG. 7 may be omitted. The order of the operations in FIG. 7 may be changed. An operation other than the operations of FIG. 7 may be performed before, during, or after the operations of FIG. 7.

With reference to FIG. 7, a synchronization operation of the switches 311 and 312 of the converter 310 and the switches 323, 324, 325, and 326 of the charge pump 320 may be described. For example, the third switch 323 and the fourth switch 324 of the charge pump 320 may be synchronized with the first switch 311 of the converter 310 during a specific period. For example, the fifth switch 325 and the sixth switch 326 of the charge pump 320 may be synchronized with the second switch 312 of the converter 310 during a specific period.

Referring to FIG. 7, in operation 701, according to an embodiment, the electronic device 101 (e.g., the controller 120) may control the first switch 311 of the converter 310, the third switch 323 of the charge pump, and the fourth switch 324 of the charge pump 320 to be on, and control the second switch 312 of the converter 310, the fifth switch 325 of the charge pump 320, and the sixth switch 326 of the charge pump 320 to be off, during a first period. The electronic device 101 (e.g., the controller 120) may determine the first period to control an output (e.g., output voltage) of the converter 310.

In operation 703, according to an embodiment, the electronic device 101 (e.g., the controller 120) may control the second switch 312 of the converter 310, the fifth switch 325 of the charge pump 320, and the sixth switch 326 of the charge pump 320 to be on, and control the first switch 311 of the converter 310, the third switch 323 of the charge pump 320, and the fourth switch 324 of the charge pump 320 to be off, during a second period. The electronic device 101 (e.g., the controller 120) may determine the second period to control an output (e.g., output voltage) of the converter 310.

In operation 705, according to an embodiment, the electronic device 101 (e.g., the controller 120) may control the first switch 311 of the converter 310, the second switch 312 of the converter 310, the third switch 323 of the charge pump 320, and the fourth switch 324 of the charge pump 320 to be off, and control the fifth switch 325 of the charge pump 320 and the sixth switch 326 of the charge pump 320 to be on, during a third period. The electronic device 101 (e.g., the controller 120) may determine the third period to control an output (e.g., output voltage) of the converter 310.

According to the synchronization operation of FIG. 7, the capacitance of the fourth capacitor 314 of FIG. 3 may be minimized or the fourth capacitor 314 may be removed. According to the synchronization operation of FIG. 7, the electronic device 101 may not include the fourth capacitor 314 of FIG. 3. The electronic device 101 may perform the operations of FIG. 7 without including the fourth capacitor 314 of FIG. 3. Although an input current of the converter 310 is continuously input, an output current of the converter 310 may be output only while the first switch 311 is on, and the output current of the converter 310 may be zero while the second switch 312 is on. Accordingly, the electronic device 101 (e.g., the controller 120) may control the third switch 323 and fourth switch 324 of the charge pump 320 to be on while the first switch 311 of the converter 310 is on. Accordingly, the first capacitor 321 functions even as a boost capacitor (e.g., the fourth capacitor 314), and as a result, the fourth capacitor 314 may not be included in the electronic device 101. Alternatively, as the first capacitor 321 functions as a boost capacitor (e.g., the fourth capacitor 314), the electronic device 101 may include a fourth capacitor 314 having a capacity decreased by as much as the capacity (e.g., capacitance) of the first capacitor 321. The structure of the power conversion circuit 210 in FIG. 3 may improve power conversion efficiency compared to an existing method. The proposed structure improves efficiency for the following reason. In general, when two capacitors (e.g., a fly capacitor (e.g., the first capacitor 321) and a boost capacitor (e.g., the fourth capacitor 314)) are connected to each other in a switched capacitor structure such as a charge pump, current is transmitted by a potential difference and a resistance between two voltage sources, and as a voltage difference increases, a current peak increases and root mean square (RMS) current increases, resulting in increased conduction loss. Therefore, in order to increase the efficiency of the charge pump, the key is to prevent the potential difference between the capacitors from being widened by increasing a switching frequency and thus frequently transmitting current or by increasing a capacitance. However, even if the conduction loss is reduced by increasing the switching frequency, switching loss such as gate driver loss of the switch increases, and increasing a capacitance has the problem of increasing a price and an area. However, the structure of FIG. 3 may increase efficiency compared to the existing method, because as the third switch 323 and the fourth switch 324 of the charge pump 320 are controlled to be on at a timing when the first switch 311 of the converter 310 is controlled to be on, even without increasing the switching frequency or the capacitance, loss resulting from voltage sources meeting each other disappears, and only general conduction loss remains due to a current source-voltage source meeting structure. Further, in the existing method, loss is added due to an equivalent series resistance within the boost capacitor (e.g., the fourth capacitor 314) in the process of current entering the boost capacitor (e.g., the fourth capacitor 314) and then being transmitted back to the fly capacitor (e.g., the first capacitor 321), whereas when the boost capacitor (e.g., the fourth capacitor 314) is removed in the structure of FIG. 3, the loss itself disappears, thereby increasing efficiency.

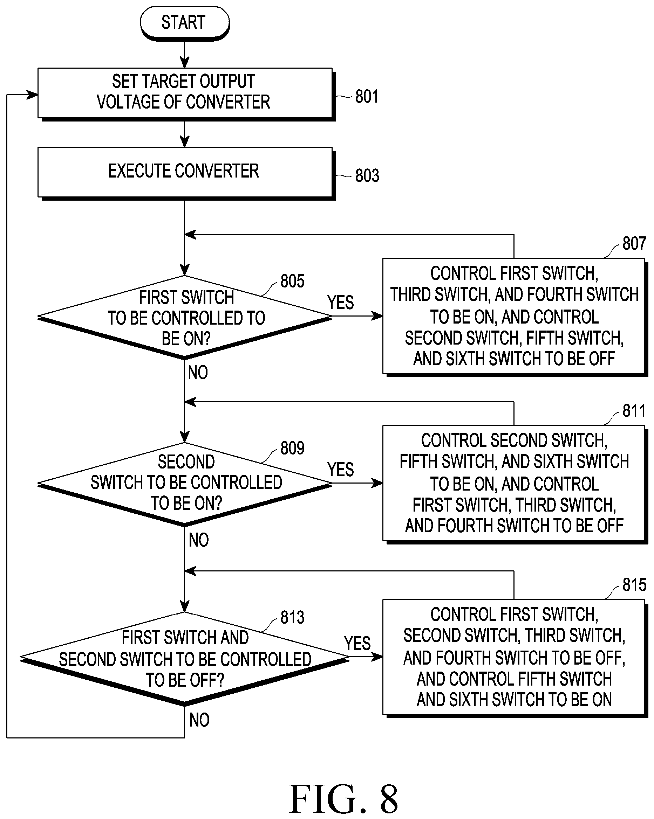

The operation of FIG. 7 will be described in detail with reference to FIG. 8.

FIG. 8 is a flowchart illustrating a method for operating an electronic device according to an embodiment. FIG. 8 may be described with reference to the afore-described embodiments and later-described embodiments.

At least some of the operations of FIG. 8 may be omitted. The order of the operations of FIG. 8 may be changed. An operation other than the operations of FIG. 8 may be performed before, during, or after the operations of FIG. 8.

Referring to FIG. 8, in operation 801, according to an embodiment, the electronic device 101 (e.g., the controller 120) may set a target output voltage of the converter 310. Setting the target output voltage of the converter 310 may include setting a new target output voltage of the converter 310 or maintaining an existing target output voltage of the converter 310. The target output voltage of the converter 310 may be a target value for an output voltage output from the converter 310. When the target output voltage of the converter 310 is zero, the operation of the converter 310 may be stopped. For example, when the target output voltage of the converter 310 is set to zero in operation 801, operation 803 may not be performed. When the target output voltage of converter 310 exceeds zero, the converter 310 may be operated (e.g., operation 803). The target output voltage of the converter 310 may be determined based on the sum of the absolute value of a first target voltage corresponding to the second capacitor 331 and the absolute value of a second target voltage corresponding to the third capacitor 341. The electronic device 101 (e.g., the controller 120) may control an output of the converter 310 based on the sum of the absolute value of the first target voltage corresponding to the second capacitor 331 and the absolute value of the second target voltage corresponding to the third capacitor 341. For example, the electronic device 101 (e.g., the controller 120) may control the output of the converter 310 such that the output voltage of the converter 310 corresponds to the sum of the absolute value of the first target voltage corresponding to the second capacitor 331 and the absolute values of the second target voltage corresponding to the third capacitor 341. For example, the electronic device 101 (e.g., the controller 120) may set the first period, the second period, and the third period of FIG. 7, such that the output voltage of the converter 310 corresponds to the sum of the absolute value of the first target voltage corresponding to the second capacitor 331 and the absolute values of the second target voltage corresponding to the third capacitor 341.

In operation 803, according to an embodiment, the electronic device 101 (e.g., the controller 120) may execute the converter 310. Executing the converter 310 may be to perform an operation of controlling on/off (e.g. controlling, changing, or switching the states) of the switches 311 and 312 of the converter 310. A switch in its "on" state may, for example, be conducting (i.e. it may provide a conductive path through it, between (or connecting) its first and second terminals), and a switch in its "off" state may, for example, be non-conducting (i.e. not providing a conducting path between its first and second terminals). The "on" and "off" states may, for example, be described respectively as "closed" and "open" states. Executing the converter 310 may include starting the operation of the converter 310, changing the operation of the converter 310, or maintaining the operation of the converter 310. Starting the operation of the converter 310 may be to apply a pulse width modulation (PWM) control signal to the switches 311 and 312 of the converter 310. Changing the operation of the converter 310 may be to change the PWM control signal applied to the switches 311 and 312 of the converter 310. The electronic device 101 (e.g., the controller 120) may execute the converter 310 based on the target output voltage of the converter 310 set in operation 801.

In operation 805, according to an embodiment, the electronic device 101 (e.g., the controller 120) may identify that the first switch 311 of the converter 310 should be controlled to be on. For example, the electronic device 101 (e.g., the controller 120) may identify that the first switch 311 of the converter 310 should be controlled to be on during the first period of operation 701 in FIG. 7. In operation 807, according to an embodiment, the electronic device 101 (e.g., the controller 120) may control the first switch 311 of the converter 310, the third switch 323 of the charge pump 320, and the fourth switch 324 of the charge pump 320 to be on, and control the second switch 312 of the converter 310, the fifth switch 325 of the charge pump 320, and the sixth switch 326 of the charge pump 320 to be off, during the first period.

In operation 809, according to an embodiment, the electronic device 101 (e.g., the controller 120) may identify that the second switch 312 of the converter 310 should be controlled to be on. For example, the electronic device 101 (e.g., the controller 120) may identify that the second switch 312 of the converter 310 should be controlled to be on during the second period of operation 703 in FIG. 7. In operation 811, according to an embodiment, the electronic device 101 (e.g., the controller 120) may control the second switch 312 of the converter 310, the fifth switch 325 of the charge pump 320, and the sixth switch 326 of the charge pump 320 to be on, and control the first switch 311 of the converter 310, the third switch 323 of the charge pump 320, and the fourth switch 324 of the charge pump 320 to be off, during the second period.

In operation 813, according to an embodiment, the electronic device 101 (e.g., the controller 120) may identify that the first switch 311 and the second switch 312 of the converter 310 should be controlled to be off. For example, the electronic device 101 (e.g., the controller 120) may identify that the first switch 311 and the second switch 312 of the converter 310 should be controlled to be off during the third period of operation 705 in FIG. 7. In operation 815, according to an embodiment, the electronic device 101 (e.g., the controller 120) may control the first switch 311 of the converter 310, the second switch 312 of the converter 310, the third switch 323 of the charge pump 320, and the fourth switch 324 of the charge pump 320 to be off, and control the fifth switch 325 of the charge pump 320 and the sixth switch 326 of the charge pump 320 to be on, during the third period.

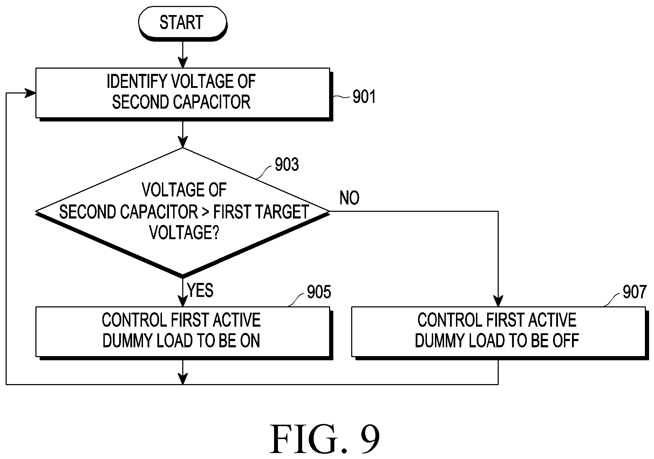

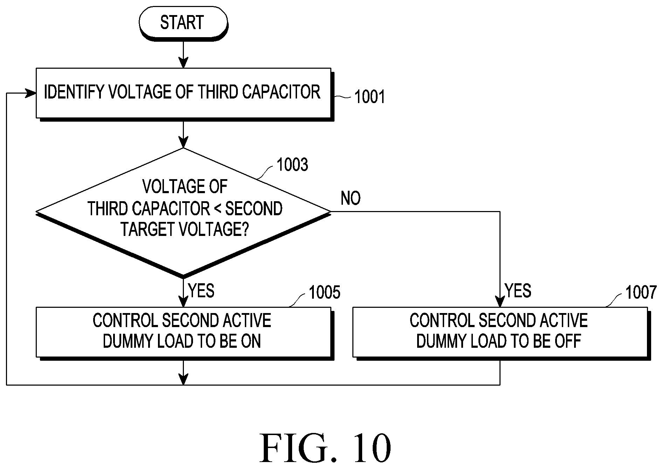

The operations of FIGS. 7 and 8 may be performed simultaneously with or separately from the operations of FIGS. 9 and 10 described later.

FIG. 9 is a flowchart illustrating a method for operating an electronic device according to an embodiment. FIG. 10 is a flowchart illustrating a method for operating an electronic device according to an embodiment. FIGS. 9 and 10 may be described with reference to the afore-described embodiments and later-described embodiments.

With reference to FIGS. 9 and 10, an operation of an active dummy load (e.g., 332 or 342) may be described. The operations of FIGS. 9 and 10 may be performed simultaneously with or separately from the operations of FIGS. 7 and 8 described above.

At least some of the operations in FIG. 9 may be omitted. The order of the operations in FIG. 9 may be changed. An operation other than the operations of FIG. 9 may be performed before, during, or after the operations of FIG. 9.

The operations of FIG. 9 may be performed simultaneously with or separately from the operations of FIGS. 7 and 8.

Referring to FIG. 9, in operation 901, according to an embodiment, the electronic device 101 (e.g., the controller 120) may identify a voltage (e.g., V_{ELVDD} in FIG. 3) of the second capacitor 331.

In operation 903, according to an embodiment, the electronic device 101 (e.g., the controller 120) may compare the voltage (e.g., V_{ELVDD} in FIG. 3) of the second capacitor 331 with a first target voltage. The first target voltage may be a target value for a voltage corresponding to the second capacitor 331. The first target voltage may be a target value for a voltage to be provided to the first end (e.g., the N1 node) of the switch 520 of the load 220 (e.g., 340 in FIGS. 3 and 5). The first target voltage may be a positive voltage.

In operation 905, according to an embodiment, the electronic device 101 (e.g., the controller 120) may control the first active dummy load 332 to be on, based on the voltage (e.g., V_{ELVDD} in FIG. 3) of the second capacitor 331 being greater than the first target voltage (e.g., positive voltage). For example, the electronic device 101 (e.g., the controller 120) may control the switch (e.g., 412) of the first active dummy load 332 to be on, based on the voltage (e.g., V_{ELVDD} in FIG. 3) of the second capacitor 331 being greater than the first target voltage. As the first active dummy load 332 is controlled to be on, the voltage (e.g., V_{ELVDD} in FIG. 3) (e.g., positive voltage) of the second capacitor 331 connected in parallel with the first active dummy load 332 may decrease. The decrease of the voltage being a positive voltage may be a decrease in the absolute value of the voltage.

In operation 907, according to an embodiment, the electronic device 101 (e.g., the controller 120) may control the first active dummy load 332 to be off, based on the voltage (e.g., V_{ELVDD} in FIG. 3) of the second capacitor 331 being equal to or less than the first target voltage (e.g., positive voltage). For example, the electronic device 101 (e.g., the controller 120) may control the switch (e.g., 412) of the first active dummy load 332 to be off, based on the voltage (e.g., V_{ELVDD} in FIG. 3) of the second capacitor 331 being equal to or less than the first target voltage.

At least some of the operations of FIG. 10 may be omitted. The order of the operations in FIG. 10 may be changed. An operation other than the operations of FIG. 10 may be performed before, during, or after the operations of FIG. 10.

The operations of FIG. 10 may be performed simultaneously with or separately from the operations of FIGS. 7 and 8.

Referring to FIG. 10, in operation 1001, according to an embodiment, the electronic device 101 (e.g., the controller 120) may identify a voltage (e.g., V_{ELVSS} in FIG. 3) of the third capacitor 341.

In operation 1003, according to an embodiment, the electronic device 101 (e.g., the controller 120) may compare the voltage (e.g., V_{ELVSS} in FIG. 3) of the third capacitor 341 with a second target voltage. The second target voltage may be a target value for a voltage corresponding to the third capacitor 341. The second target voltage may be a target value for a voltage to be provided to the first end (e.g., the N2 node) of the LED 510 of the load 220 (e.g., 340 in FIGS. 3 and 5). The second target voltage may be a negative voltage.

In operation 1005, according to an embodiment, the electronic device 101 (e.g., the controller 120) may control the second active dummy load 342 to be on, based on the voltage (e.g., V_{ELVSS} in FIG. 3) of the third capacitor 341 being less than the second target voltage (e.g., negative voltage). For example, the electronic device 101 (e.g., the controller 120) may control the switch (e.g., 422) of the second active dummy load 342 to be on, based on the voltage (e.g., V_{ELVSS} in FIG. 3) of the third capacitor 341 being less than the second target voltage. As the second active dummy load 342 is controlled to be on, the voltage (e.g., V_{ELVSS} in FIG. 3) (e.g., negative voltage) of the third capacitor 341 connected in parallel with the second active dummy load 342 may increase. The increase of the voltage being a negative voltage may be a decrease in the absolute value of the voltage.

In operation 1007, according to an embodiment, the electronic device 101 (e.g., the controller 120) may control the second active dummy load 342 to be off, based on the voltage (e.g., V_{ELVSS} in FIG. 3) of the third capacitor 341 being equal to or greater than the second target voltage (e.g., negative voltage). For example, the electronic device 101 (e.g., the controller 120) may control the switch (e.g., 422) of the second active dummy load 342 to be off, based on the voltage (e.g., V_{ELVSS} in FIG. 3) of the third capacitor 341 being equal to or greater than the second target voltage.

Those skilled in the art will understand that the embodiments described in this specification are applicable interchangeably within the applicable scope. For example, those skilled in the art will understand that at least some operations of an embodiment described in this specification may be omitted, or at least some operations of an embodiment may be applied in conjunction with each other.

The technical objects to be achieved in the disclosure are not limited to those mentioned above, and other technical objects not mentioned may be clearly understood by those skilled in the art from the following description.

The effects achievable from the disclosure are not limited to those mentioned above, and other effects not mentioned will be clearly understood by those skilled in the art from the following description.

With regard to the following paragraphs that begin with the wording "in an embodiment", it will be appreciated that the features of any one paragraph may be combined with the features of any other paragraph, or any combination of these paragraphs, unless clearly inconsistent and incompatible, with corresponding effect(s) and/or advantage(s). In other words, this specification is to be interpreted as an explicit disclosure of subject matter corresponding to any combination of one or more of the following paragraphs beginning with the wording "in an embodiment".

According to an embodiment, the electronic device 101 or 600 may include the power conversion circuit 210 and the load 220 or 340 configured to receive power from the power conversion circuit 210. The power conversion circuit 210 may include the converter 310 including the inductor 313, the first switch 311, and the second switch 312. The charge pump 320 may include the third switch 323, the fourth switch 324, the first capacitor 321, the fifth switch 325, and the sixth switch 326. The power conversion circuit 210 may include the second capacitor 331, a first active (e.g. controllable) load 332 (e.g. the first active dummy load 332) connected in parallel with the second capacitor 331, the third capacitor 341, and a second active (e.g. controllable) load 342 (e.g. the second active dummy load 342) connected in parallel with the third capacitor 341.

According to an embodiment, the first end of the inductor 313 may be connected to the first end of the first switch 311 and the first end of the second switch 312. The second end of the first switch 311 may be connected to the first end of the third switch 323. The second end of the second switch 312 may be connected to the first end of the fourth switch 324 and the ground. The second end of the third switch 323 may be connected to the first end of the fifth switch 325 and the first end of the first capacitor 321. The second end of the fourth switch 324 may be connected to the first end of the sixth switch 326 and the second end of the first capacitor 321. The second end of the fifth switch 325 may be connected to the first end of the second capacitor 321 and the first end of the first active load 332 (e.g. the first active dummy load 332). The second end of the sixth switch 326 may be connected to the first end of the third capacitor 341 and the first end of the second active load 342 (e.g. the second active dummy load 342). The second end of the second capacitor 331 may be connected to the second end of the first active (e.g. dummy) load 332, the second end of the second active (e.g. dummy) load 342, the second end of the third capacitor 341, and the ground. The first end of the load 220 or 340 may be connected to the first end of the second capacitor 331. The second end of the load 220 or 340 may be connected to the first end of the third capacitor 341.

According to an embodiment, the electronic device 101 or 600 may further include the fourth capacitor 314 connected in parallel with the converter 310 (for example between, or across, output terminals of the converter). The first end of the fourth capacitor 314 may be connected to the second end of the first switch 311 and the first end of the third switch 323. The second end of the fourth capacitor 314 may be connected to the second end of the second switch 312 and the first end of the fourth switch 324.

According to an embodiment, the converter 310 may be a boost converter or a non-inverting buck-boost converter.

According to an embodiment, the electronic device 101 or 600 may further include a controller 120 (e.g., the processor 120). The controller 120 may be configured to, during a first period, control the first switch 311, the third switch 323, and the fourth switch 324 to be on, and control the second switch 312, the fifth switch 325, and the sixth switch 326 to be off. The controller 120 may be configured to, during a second period, control the second switch 312, the fifth switch 325, and the sixth switch 326 to be on, and control the first switch 311, the third switch 323, and the fourth switch 324 to be off. The controller 120 may be configured to, during a third period, control the first switch 311, the second switch 312, the third switch 323, and the fourth switch 324 to be off, and control the fifth switch 325 and the sixth switch 326 to be on.

According to an embodiment, the controller 120 may be configured to control an output of the converter 310 based on a sum of an absolute value of a first target voltage corresponding to the second capacitor 331 and an absolute value of a second target voltage corresponding to the third capacitor 341.

According to an embodiment, the controller 120 may be configured to control the first active (e.g. dummy) load 332 to be on, based on a first voltage of the second capacitor 331 being greater than the first target voltage. The controller 120 may be configured to control the second active (e.g. dummy) load 342 to be on, based on a second voltage of the third capacitor 341 being less than the second target voltage.

According to an embodiment, the first active (e.g. dummy) load 332 may include the first resistor 411 and the seventh switch 412. The second active (e.g. dummy) load 342 may include the second resistor 421 and the eighth switch 422.

According to an embodiment, the first voltage of the second capacitor 331 may be provided to the first end of the load 220 or 340. The second voltage of the third capacitor 341 may be provided to the second end of the load 220 or 340.

According to an embodiment, the load 220 or 340 may include the LED 510 and the ninth switch 520.

According to an embodiment, the electronic device 101 or 600 may further include the strap 620 configured to mount the electronic device 101 or 600 on a user's wrist.

According to an embodiment, a method for operating the electronic device 101 or 600 may include controlling the switches 311 and 312 of the converter 310 of the electronic device 101 or 600 and the switches 323, 324, 325, and 326 of the charge pump 320 connected in parallel with the converter 310. The converter 310 may include the inductor 313, the first switch 311, and the second switch 312. The charge pump 320 may include the third switch 323, the fourth switch 324, the first capacitor 321, the fifth switch 325, and the sixth switch 326. The method may include controlling the first active (e.g. dummy) load 332 connected in parallel with the second capacitor 331 of the electronic device 101 or 600 or controlling the second active (e.g. dummy) load 342 connected in parallel with the third capacitor 341 of the electronic device 101 or 600.

According to an embodiment, controlling the switches 323, 324, 325, and 326 of the charge pump 320 may include providing a voltage of the first capacitor 321 to the second capacitor 331 and the third capacitor 341 by controlling the fifth switch 325 and the sixth switch 326 to be on. The first end of the fifth switch 325 may be connected to the first end of the first capacitor 321. The first end of the sixth switch 326 may be connected to the second end of the first capacitor 321. The first end of the second capacitor 331 may be connected to the second end of the fifth switch 325. The first end of the third capacitor 341 may be connected to the second end of the sixth switch 326. The second end of the second capacitor 331 may be connected to the second end of the third capacitor 341 and the ground.

According to an embodiment, the electronic device 101 or 600 may further include the fourth capacitor 314 connected in parallel with the converter 310.

According to an embodiment, controlling the switches 311 and 312 of the converter 310 and the switches 323, 324, 325, and 326 of the charge pump 320 may include, during a first period, controlling the first switch 311, the third switch 323, and the fourth switch 324 to be on, and controlling the second switch 312, the fifth switch 325, and the sixth switch 326 to be off. Controlling the switches 311 and 312 of the converter 310 and the switches 323, 324, 325, and 326 of the charge pump 320 may include, during a second period, controlling the second switch 312, the fifth switch 325, and the sixth switch 326 to be on, and controlling the first switch 311, the third switch 323, and the fourth switch 324 to be off. Controlling the switches 311 and 312 of the converter 310 and the switches 323, 324, 325, and 326 of the charge pump 320 may include, during a third period, controlling the first switch 311, the second switch 312, the third switch 323, and the fourth switch 324 to be off, and controlling the fifth switch 325 and the sixth switch 326 to be on.

According to an embodiment, controlling the switches 311 and 312 of the converter 310 may include controlling an output of the converter 310 based on a sum of an absolute value of a first target voltage corresponding to the second capacitor 331 and an absolute value of a second target voltage corresponding to the third capacitor 341.

According to an embodiment, controlling the first active (e.g. dummy) load 332 or controlling the second active (e.g. dummy) load 342 may include controlling the first active (e.g. dummy) load 332 to be on,

based on a first voltage of the second capacitor 331 being greater than the first target voltage. Controlling the first active (e.g. dummy) load 332 or controlling the second active (e.g. dummy) load 342 may include controlling the second active (e.g. dummy) load 342 to be on, based on a second voltage of the third capacitor 341 being less than the second target voltage.

According to an embodiment, the first active (e.g. dummy) load 332 may include the first resistor 411 and the seventh switch 412. The second active (e.g. dummy) load 342 may include the second resistor 421 and the eighth switch 422. Controlling the first active (e.g. dummy) load 332 may include controlling the seventh switch 412. Controlling the second active (e.g. dummy) load 342 may include controlling the eighth switch 422.

According to an embodiment, in a computer-readable recording medium storing instructions configured to cause a controller 120 of the electronic device 101 or 600 to perform at least one operation, the at least one operation may include controlling the switches 311 and 312 of the converter 310 of the electronic device 101 or 600 and the switches 323, 324, 325, and 326 of the charge pump 320 connected in parallel with the converter 310. The converter 310 may include the inductor 313, the first switch 311, and the second switch 312. The charge pump 320 may include the third switch 323, the fourth switch 324, the first capacitor 321, the fifth switch 325, and the sixth switch 326. The at least one operation may include controlling the first active (e.g. dummy) load 332 connected in parallel with the second capacitor 331 of the electronic device 101 or 600 or controlling the second active (e.g. dummy) load 342 connected in parallel with the third capacitor 341 of the electronic device 101 or 600.

According to an embodiment, controlling the switches 323, 324, 325, and 326 of the charge pump 320 may include providing a voltage of the first capacitor 321 to the second capacitor 331 and the third capacitor 341 by controlling the fifth switch 325 and the sixth switch 326 to be on. The first end of the fifth switch 325 may be connected to the first end of the first capacitor 321. The first end of the sixth switch 326 may be connected to the second end of the first capacitor 321. The first end of the second capacitor 331 may be connected to the second end of the fifth switch 325. The first end of the third capacitor 341 may be connected to the second end of the sixth switch 326. The second end of the second capacitor 331 may be connected to the second end of the third capacitor 341 and the ground.

According to an embodiment, the electronic device 101 or 600 may further include the fourth capacitor 314 connected in parallel with the converter 310.

According to an embodiment, controlling the switches 311 and 312 of the converter 310 and the switches 323, 324, 325, and 326 of the charge pump 320 may include, during a first period, controlling the first switch 311, the third switch 323, and the fourth switch 324 to be on, and controlling the second switch 312, the fifth switch 325, and the sixth switch 326 to be off. Controlling the switches 311 and 312 of the converter 310 and the switches 323, 324, 325, and 326 of the charge pump 320 may include, during a second period, controlling the second switch 312, the fifth switch 325, and the sixth switch 326 to be on, and controlling the first switch 311, the third switch 323, and the fourth switch 324 to be off. Controlling the switches 311 and 312 of the converter 310 and the switches 323, 324, 325, and 326 of the charge pump 320 may include, during a third period, controlling the first switch 311, the second switch 312, the third switch 323, and the fourth switch 324 to be off, and controlling the fifth switch 325 and the sixth switch 326 to be on.

According to an embodiment, controlling the switches 311 and 312 of the converter 310 may include controlling an output of the converter 310 based on a sum of an absolute value of a first target voltage corresponding to the second capacitor 331 and an absolute value of a second target voltage corresponding to the third capacitor 341.

According to an embodiment, controlling the first active (e,g, dummy) load 332 or controlling the second active (e.g. dummy) load 342 may include controlling the first active (e.g. dummy) load 332 to be on,

based on a first voltage of the second capacitor 331 being greater than the first target voltage. Controlling the first active (e.g. dummy) load 332 or controlling the second active (e.g. dummy) load 342 may include controlling the second active (e.g. dummy) load 342 to be on, based on a second voltage of the third capacitor 341 being less than the second target voltage.

According to an embodiment, the first active (e.g. dummy) load 332 may include the first resistor 411 and the seventh switch 412. The second active (e.g. dummy) load 342 may include the second resistor 421 and the eighth switch 422. Controlling the first active (e.g. dummy) load 332 may include controlling the seventh switch 412. Controlling the second active (e.g. dummy) load 342 may include controlling the eighth switch 422.

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Embodiments of the disclosure may be implemented as software (e.g., a program) including one or more instructions that are stored in a storage medium (e.g., internal memory or external memory) that is readable by a machine (e.g., an electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 600) comprising:
a power conversion circuit (210); and
a load (220) configured to receive power from the power conversion circuit (210),
wherein the power conversion circuit (210) includes:
a converter (310) including an inductor (313), a first switch (311), and a second switch (312);
a charge pump (320) including a third switch (323), a fourth switch (324), a first capacitor (321), a fifth switch (325), and a sixth switch (326);
a second capacitor (331);
a first active dummy load (332) connected in parallel with the second capacitor (331);
a third capacitor (341); and
a second active dummy load (342) connected in parallel with the third capacitor (341).

2. The electronic device (101; 600) of claim 1, wherein a first end of the inductor (313) is connected to a first end of the first switch (311) and a first end of the second switch (312),
wherein a second end of the first switch (311) is connected to a first end of the third switch (323),
wherein a second end of the second switch (312) is connected to a first end of the fourth switch (324) and a ground,
wherein a second end of the third switch (323) is connected to a first end of the fifth switch (325) and a first end of the first capacitor (321),
wherein a second end of the fourth switch (324) is connected to a first end of the sixth switch (326) and a second end of the first capacitor (321),
wherein a second end of the fifth switch (325) is connected to a first end of the second capacitor (321) and a first end of the first active dummy load (332),
wherein a second end of the sixth switch (326) is connected to a first end of the third capacitor (341) and a first end of the second active dummy load (342),
wherein a second end of the second capacitor (331) is connected to a second end of the first active dummy load (332), a second end of the second active dummy load (342), a second end of the third capacitor (341), and the ground,
wherein a first end of the load (220) is connected to the first end of the second capacitor (331), and
wherein a second end of the load (220) is connected to the first end of the third capacitor (341).

3. The electronic device (101; 600) of claim 1 or 2, further comprising a fourth capacitor (314) connected in parallel with the converter (310), and
wherein a first end of the fourth capacitor (314) is connected to the second end of the first switch (311) and the first end of the third switch (323), and
wherein a second end of the fourth capacitor (314) is connected to the second end of the second switch (312) and the first end of the fourth switch (324).

4. The electronic device (101; 600) of any one of claims 1 to 3, wherein the converter (310) is a boost converter or a non-inverting buck-boost converter.

5. The electronic device (101; 600) of any one of claims 1 to 4, further comprising a controller (120) configured to:
during a first period, control the first switch (311), the third switch (323), and the fourth switch (324) to be on, and control the second switch (312), the fifth switch (325), and the sixth switch (326) to be off,
during a second period, control the second switch (312), the fifth switch (325), and the sixth switch (326) to be on, and control the first switch (311), the third switch (323), and the fourth switch (324) to be off, and
during a third period, control the first switch (311), the second switch (312), the third switch (323), and the fourth switch (324) to be off, and control the fifth switch (325) and the sixth switch (326) to be on.

6. The electronic device (101; 600) of any one of claims 1 to 5, further comprising a controller (120) configured to control an output of the converter (310) based on a sum of an absolute value of a first target voltage corresponding to the second capacitor (331) and an absolute value of a second target voltage corresponding to the third capacitor (341).

7. The electronic device (101; 600) of any one of claims 1 to 6, wherein the controller (120) is configured to:
control the first active dummy load (332) to be on, based on a first voltage of the second capacitor (331) being greater than the first target voltage, and
control the second active dummy load (342) to be on, based on a second voltage of the third capacitor (341) being less than the second target voltage.

8. The electronic device (101; 600) of any one of claims 1 to 7, wherein the first active dummy load (332) includes a first resistor (411) and a seventh switch (412), and
wherein the second active dummy load (342) includes a second resistor (421) and an eighth switch (422).

9. The electronic device (101; 600) of any one of claims 1 to 8, wherein the first voltage of the second capacitor (331) is provided to a first end of the load (220), and
wherein the second voltage of the third capacitor (341) is provided to a second end of the load (220).

10. The electronic device (101; 600) of any one of claims 1 to 9, wherein the load (220) includes a light emitting diode (510) and a ninth switch (520).

11. The electronic device (101; 600) of any one of claims 1 to 10, further comprising a strap (620) configured to mount the electronic device (101; 600) on a user's wrist.

12. A method for operating an electronic device (101; 600), comprising:
controlling switches (311; 312) of a converter (310) of the electronic device (101; 600) and switches (323; 324; 325; 326) of a charge pump (320) connected in parallel with the converter (310), wherein the converter (310) includes an inductor (313), a first switch (311), and a second switch (312), and the charge pump (320) includes a third switch (323), a fourth switch (324), a first capacitor (321), a fifth switch (325), and a sixth switch (326), and
controlling a first active dummy load (332) connected in parallel with a second capacitor (331) of the electronic device (101; 600) or controlling a second active dummy load (342) connected in parallel with a third capacitor (341) of the electronic device (101; 600).

13. The method of claim 12, wherein controlling the switches (323; 324; 325; 326) of the charge pump (320) comprises providing a voltage of the first capacitor (321) to the second capacitor (331) and the third capacitor (341) by controlling the fifth switch (325) and the sixth switch (326) to be on,
wherein a first end of the fifth switch (325) is connected to a first end of the first capacitor (321);
wherein a first end of the sixth switch (326) is connected to a second end of the first capacitor (321);
wherein a first end of the second capacitor (331) is connected to a second end of the fifth switch (325);
wherein a first end of the third capacitor (341) is connected to a second end of the sixth switch (326); and
wherein a second end of the second capacitor (331) is connected to a second end of the third capacitor (341) and a ground.

14. The method of claim 12 or 13, wherein the electronic device (101; 600) further includes a fourth capacitor (314) connected in parallel with the converter (310).

15. A computer-readable recording medium storing instructions configured to cause a controller (120) of an electronic device (101; 600) to perform at least one operation, wherein the at least one operation includes:
controlling switches (311; 312) of a converter (310) of the electronic device (101; 600) and switches (323; 324; 325; 326) of a charge pump (320) connected in parallel with the converter (310), wherein the converter (310) includes an inductor (313), a first switch (311), and a second switch (312), and the charge pump (320) includes a third switch (323), a fourth switch (324), a first capacitor (321), a fifth switch (325), and a sixth switch (326), and
controlling a first active dummy load (332) connected in parallel with a second capacitor (331) of the electronic device (101; 600) or controlling a second active dummy load (342) connected in parallel with a third capacitor (341) of the electronic device (101; 600).
